# EUROPEAN PATENT SPECIFICATION

(11) **EP 3 956 159 B1**
(45) Date of publication and mention of the grant of the patent: **08.07.2026**
(21) Application number: 20716857.6
(22) Date of filing: 14.04.2020
(51) Int. Cl.: B60G 9/00, B60B 35/08, B21D 17/02, B21D 39/04, B21J 5/06, B21D 22/04, B21D 53/90, B21J 15/12, B21K 25/00, B21J 5/12, B60B 35/00

(54) **PROVIDING AN INTERLOCKING RECESS IN A TUBULAR AXLE BODY OF A VEHICLE AXLE**
BEREITSTELLUNG EINER VERRIEGELUNGSAUSSPARUNG IN EINEM ROHRFÖRMIGEN ACHSKÖRPER EINER FAHRZEUGACHSE
DISPOSITION D'UN ÉVIDEMENT DE VERROUILLAGE DANS UN CORPS D'ESSIEU TUBULAIRE D'UN ESSIEU DE VÉHICULE

(30) Priority: 19.04.2019 NL 2022985
(43) Date of publication of application: 23.02.2022
(73) Proprietor: VDL Weweler B.V., 7325 WC Apeldoorn (NL)
(72) Inventor: AALDERINK, Derk, Geert, 7245 NV Laren (NL); EVERTS, Geert, 7721 KJ Dalfsen (NL); HENDRIKS, Michel, 7382 CL Klarenbeek (NL); BRUINJA, Marten, Frank, Ciarán, 7545 VV Enschede (NL); SCHRIER, Tom, 7323 RL Apeldoorn (NL)
(74) Representative: EP&C
(86) International application number: PCT/EP2020/060473
(87) International publication number: WO 2020/212353

(56) References cited:
- EP-A1- 1 334 848
- EP-A1- 2 499 009
- EP-A1- 3 461 653
- US-A1- 2012 056 398
- US-A1- 2012 080 862
- US-A1- 2013 168 940

## Description

The invention relates to a method for manufacturing a wheel axle of a utility vehicle such as a trailer, semi-trailer or a truck, the wheel axle comprising an axle body comprising a steel tubular wall and having a clamping region adapted to be clamped in use between clamping parts of the vehicle suspension by means of tensioning means, wherein an interlocking recess is formed in the clamping region.

Merely as a rough indication of the dimensions of such parts it is noted that in practise a tubular axle body for wheel axles of a utility vehicle typically may have an outer diameter of 146mm and a wall thickness of around 8 - 15mm. It is noted however that also other dimensions are possible.

In the field of wheel axle suspensions for utility vehicles, the axle body is often a hollow tubular body with a circular cross section. The axle body is rigidly attached to trailing arms by clamping construction, which comprises usually bolts or U-bolts which clamp the axle body against the trailing arm or against an intermediate part, such as an axle pad. Since the axle body has a circular shape it is better able to withstand torsional loads than for example a square axle. The torsional loads are resulting mainly from roll movements of the vehicle which are transferred to the axle body by the clamping arrangement. The round shape of the axle body however also has a disadvantage, which is that it is more difficult to lock the axle body in rotational direction with respect to the other parts as for example an axle body with a square cross section. Over the years many solutions have been disclosed for interlocking the axle body in the rotational direction. One of the solutions is directed to providing a recess in the axle body and a protrusion on one of the clamping parts, for example the axle seat portion of the trailing arm or an axle seat portion of an axle pad. In particular one solution direction provides the recess by deformation of the axle body, thus without machining.

EP 1 334 848 discloses an example wherein the axle body is provided with an interlocking recess by pressing a ball segment into the outer surface of the tubular axle body. A disadvantage of this known method to form the interlocking recesses is that it requires a counter shape which is introduced in the tubular axle body and functions as a backing for the axle body wall to prevent a deformation of the round shape other than the required indent.

Another example is known from EP 2 499 009 wherein an elongate indent having a rounded cross-sectional shape is formed in the outer surface of the tubular axle body to provide an interlocking recess. This method is in practise performed without a backing part to support the inside of the axle body during forming of the indent. However, this requires heating of the axle body.

Both providing a backing part in the axle body or heating the axle body results in that the interlocking recess has to be formed in an early stage of the axle manufacturing process, in particular before the axle stubs are welded to the ends of the axle body and/or the axle body is coated with a (corrosion) protective coating. This means in practise that the axle manufacturer has to provide the interlocking recesses, which may have different configurations for different customers, which are typically vehicle, e.g. (semi) trailer manufacturers or vehicle suspension manufacturers. It would be more advantageous to provide the interlocking recess after the axle is manufactured, thus provided with axle stubs and coated.

US 2012/056398 A1 discloses another example wherein an interlocking recess formed in a hollow axle tube is obtained by cold pressing. The press molded slot-shaped recess has an edge which forms a flange higher than the outside diameter of the axle.

The invention has for an object to provide a method for manufacturing a wheel axle in which the interlocking recess can be formed in the axle body in a latest stage of the axle manufacturing process.

This object is achieved by a method for manufacturing a wheel axle of a utility vehicle such as a trailer, semi-trailer or a truck, the wheel axle comprising a hollow axle body comprising a steel tubular wall having a thickness t and having a clamping region adapted to be clamped in use between clamping parts of the vehicle suspension by means of tensioning means, wherein an interlocking recess is formed in the clamping region. The interlocking recess is formed by a cold forming process wherein a stamp member is pressed into the outer surface of the tubular wall so as to form an indent, wherein the dimension of the stamp and the pressing force are such that the surface pressure on the stamped surface portion of the tubular wall locally exceeds the yield point to form the indent and the pressing force is such that the tubular wall portion adjacent the interlocking recess is plastically sagging over a distance inwards which is at most corresponding to the thickness t of the tubular wall, preferably is within a range of 0 to 0,5 times the thickness t of the tubular wall.

The invention is based on the insight that if the outer surface area of the axle body, which is pressed inwardly by the stamp, is small relative to the diameter and the wall thickness of the axle body, the resistance of the axle body material to be pressed inwardly is smaller than the resistance to bending of the tubular wall. The total pressing force can remain small enough such that the axle body does not deform globally, but locally the surface of axle body is subjected to a high enough pressure to cause plastic deformation. Thereby a very local deformation is possible using the method of the invention and thus the formation of a very local indent with well-defined edges. Because of this the inside of the axle body does not have to be supported by a backing member to maintain the round shape of the axle body. Furthermore, the method according to the invention is performed by a cold forming process which is advantageous because heating the axle body would be at least detrimental to the material properties and the protective coating of the axle body. Moreover, an anticorrosion coating, which may be a cathodic dip-lacquering (KTL), which would be reheatedfor warm forming could generate noxious fumes. The formation of such fumes is avoided by the method according to the present invention.

Another advantage of the method according to the invention is that it allows the suspension manufacturer to determine the distance between the axle clamping regions and thus determine the width between the trailing arms as is deemed fit for the specific suspension. The result of the method according to the invention as defined by claim 1 is that the recess has relatively sharp edges and contour, because the surrounding wall portion adjacent the recess do not deform plastically due to the pressure force, or at least only deforms plastically to a small extent. At the same time the axle body maintains its strength at the recess. This is contrary to making a recess by a machining operation, e.g. milling, which would result in a recess with sharp and well defined edges, but which also causes considerable weakening of the axle body. This is also contrary to the cold forming method disclosed in US 2012/056398 A1, which results in an edge forming a flange higher than the outside diameter of the axle, whereas the present invention proposes a cold forming method using a stamp member such that the surrounding wall portion adjacent the interlocking recess is sagging over a distance inwards.

Preferably the wheel axle includes axle stubs which are attached to each one of the ends of the tubular axle body before the interlocking recess is formed in the axle body. In this way it is not necessarily the axle manufacturer that has to provide the interlocking recess, but it may be done by the suspension manufacturer or the vehicle manufacturer as desired.

Preferably the axle body is provided with an external surface coating, before the interlocking recess is formed in the axle body. Also this has the advantage that the axle manufacturer can provide all the necessary measures to the axle and only the specific interlocking recess configuration can be made at the site of the suspension or vehicle manufacturer in accordance with his specifications.

Although the method according to the invention can be performed on tubular axle bodies having any desired shapes, it will in practise be most useful in manufacturing axles having an axle body that, at least at the clamping region, is formed having a substantially circular cross section, because such a circular cross section in practise requires an interlocking provision to prevent rotation of the axle body in the clamping arrangement.

In a possible embodiment of the method of the invention the stamp is displaced back and forth in the longitudinal direction each time between two press movements, such that at each press movement an indent is formed, wherein the indents adjoin each other and together form one interlocking recess. This particular method provides the possibility to make interlocking recesses which are larger than the indents it is made up of. Without wishing to be bound by dimensions, the entire recess in a practical example may have a length of 30mm, a width of 10mm and a depth of 6mm, when the wall of the axle body has a thickness of 8 - 15mm. In practise a tubular axle body typically has an outer diameter of 146mm, although also other diameters are used. In practise two or three indents forming a recess are at least necessary to provide a sufficiently strong interlocking of the protrusion in the recess. However, it is also conceivable to provide one longer recess for example with a length of 90mm instead of three aligned recesses separated by bridge portions.

The interlocking recess is made in the axle body to be able to lock the axle in circumferential direction with respect to another clamping part such as an axle seat of a trailing arm, an axle pad, or another clamping part. In particular such a clamping part will have an associated protrusion, for example an elongate key-like protrusion integrally formed on the clamping part, or a separate key which is received in the interlocking recess in the axle body and in an interlocking recess in the clamping part.

Preferably the interlocking recess is formed having an elongate shape having a longitudinal axis extending in the axial direction of the axle body.

In a possible method according to the invention a plurality of interlocking recesses is formed in the clamping region of the axle body. These interlocking recesses may be formed in a staggered pattern. Another option is to form the recesses in line. In the staggered or the aligned pattern the elongate recesses are all extending parallel to the axial direction of the axle body.

Preferably the recesses are formed with an intermediate bridge between longitudinal ends of consecutive ones of the recesses. The intermediate bridges provide stiffness to the tubular wall. However, there may be embodiments wherein the bridges can be omitted and recesses merge to form one big recess.

Preferably the recess is formed with tapering sidewalls, wherein the tapering sidewalls have a depth which is smaller than the wall thickness of the tubular wall. By forming the recess in this way, the force due to torsional loads in the circumferential/tangential direction of the axle body, applied by the interlocking protrusion that is received in the interlocking recess is only applied in the wall of the tube and not radially inward therefrom. Thereby the forces are best absorbed by the axle body.

Furthermore, the tapering sidewalls of recess allow to mount an interlocking protrusion within larger dimensional tolerances. Moreover, less shear load is applied to the tubular wall when the protrusion is slightly larger than the recess. Another advantage is of tapering sidewalls is that the stamp member is less prone to wear.

The methods according to the invention do not require that the tubular axle body wall is supported from the inside during the production of the recesses, that is done by a cold forming process. On the other hand it is possible to support the outer side of the axle body, preferably over a part of the circumference of the axle body as large as possible. This facilitates the prevention of plastic deformation of the axle body due to the formation of the interlocking recesses.

It is noted that the interlocking recess formed in the axle body provided the most advantage in axle bodies having a round, in particular a circular outer contour, which tend to loosen and rotate relative to the clamping means due to torsional loads. However, it is also conceivable to use the methods according to the invention to provide interlocking recesses in axle bodies having another outer contour, such as for example a rectangular, in particular a square outer contour, which is also often used in air sprung wheel axle suspensions.

The invention is further elucidated in the following detailed description with reference to the drawing, wherein:
Fig. 1 shows schematically a side elevational view of an embodiment of an air sprung wheel axle suspension including an axle body made by a method according to the invention,
Fig. 2 shows a longitudinal section of the axle clamping arrangement of the wheel axle suspension of Fig. 1,
Fig. 3 shows schematically a side elevational view of another embodiment of an air sprung wheel axle suspension including an axle body made by a method according to the invention,
Fig. 4 shows a longitudinal section of the axle clamping arrangement of the wheel axle suspension of Fig. 3,
Fig. 5 shows schematically a side elevational view of yet another embodiment of an air sprung wheel axle suspension including an axle body made by a method according to the invention,
Fig. 6 shows a longitudinal section of the axle clamping arrangement of the wheel axle suspension of Fig. 5,
Fig. 7 and Fig. 8 illustrate in a view in perspective and a cross sectional view, respectively, a method according to a first aspect of the invention,
Figs. 9 and 10 show a longitudinal section and a cross section, respectively, of a portion of the axle body wall resulting from the method illustrated in Figs. 7 and 8,
Figs. 11 and 12 show a longitudinal section and a cross section, respectively, of a portion of the axle body wall resulting from the method illustrated in Figs. 7 and 8, combined with an axle pad,
Fig. 13 shows an isometric view of a part of the axle pad illustrated in Figs. 11 and 12,
Fig. 14A - 14C show a cross-section of an axle body having different amounts of plastic inward deformation at the side where the indent is made,
Figs. 15 - 18 show an isometric view of axle bodies made by the method according to the invention having different configurations of interlocking recesses formed in them,
Fig. 19 shows a longitudinal section of a portion of the axle body wall of the axle body of Fig. 17 combined with an axle pad.

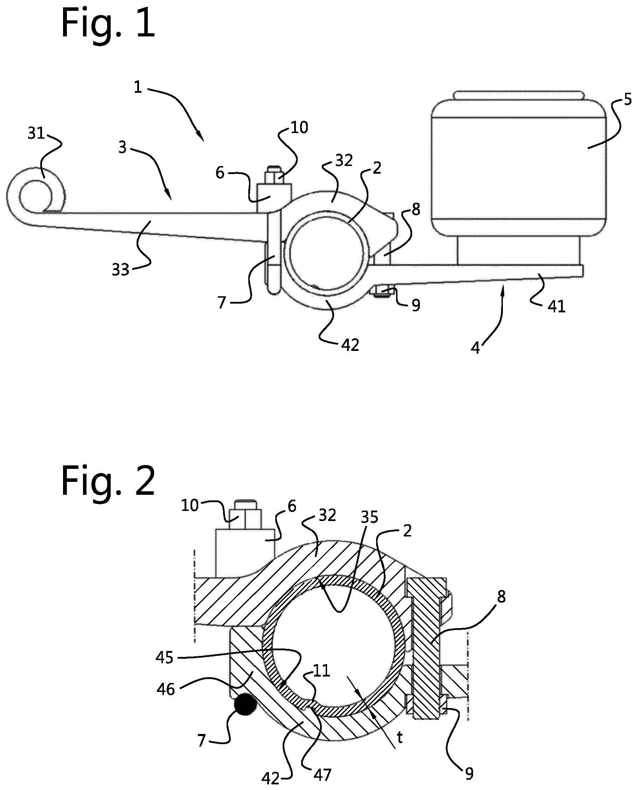

The present invention relates to a method for manufacturing a wheel axle of a utility vehicle such as a trailer, semi-trailer or a truck. Fig. 1 shows an air sprung wheel axle suspension 1, wherein the axle body is made by a method according to the invention.

The wheel axle comprises a tubular axle body 2 extending in a transverse direction of the vehicle. The axle body 2 is hollow and has a steel tubular wall having a thickness t (cf. Fig. 2) and a circular contour.

In practise a typical tubular axle body 2 has an outer diameter of 146mm, but also other dimensions are possible. For example there are also known axle bodies having an outer diameter of 127mm. The thickness t may be somewhere in the range 8-15mm, for example 10mm.

The suspension 1 furthermore comprises on either lateral side of the vehicle chassis a trailing arm 3 attached to the axle body 2 and extending in the longitudinal direction of the vehicle. The trailing arm 3 has an integrally formed eyelet 31 at a front end and an axle seating portion 32 at a rear end thereof. In the specific embodiment shown the trailing arm is made of spring steel and it has a spring portion 33 between the eyelet 31 and the axle seating portion 32. The spring portion 33 is formed as a leaf spring and is designed to deform elastically during use of the vehicle such that the assembly of the two parallel trailing arms and the axle body attached thereto can stabilize the vehicle by counteracting roll movements of the vehicle. The eyelet 31 is adapted to pivotally couple the front end of the trailing arm 3 to a bearing bracket attached to the vehicle chassis by means of a pivot pin, e.g. a pivot bolt.

Associated with each one of the trailing arms 3 is a corresponding rear arm 4. The rear arm 4 comprises an axle seating portion 42 and a support arm 41 for an air spring 5. The support arm 41 extends from the axle seating portion 42 towards the rear. In Fig. 1 is shown that the air spring 5 has a lower end mounted on the support arm 41. The upper end of the air spring 5 is attached to the vehicle chassis.

The axle body 2 is attached to the trailing arm 3 by a clamping arrangement which will be further elucidated with reference to Fig. 2.

The axle seating portion 32 of the trailing arm 3 and the axle seating portion 42 of the rear arm 4 each have a concavely formed axle engagement surface 35 and 45, respectively. The axle body 2 has a clamping region adapted to be clamped in use between the concavely formed axle engagement surfaces 35, 35 of the two axle seating portions 32, 42. The axle seating portions 32 and 42 form clamping parts which are clamped around the clamping region of the axle body 2 by means of tensioning means, in particular tensioning bolts. In the embodiment shown in Figs. 1 and 2 the front end of the clamping arrangement is tensioned by a U-bolt 7, which extends with a bend portion of the U-shape over a nose portion 46 of the axle seating portion 42 of the rear arm 4 and extends with the two legs of the U-shape through a counter plate 6 extending transversely over a top side of the trailing arm 3. Nuts 10 screwed on the legs of the U-bolt 7 tighten the front end of the clamping arrangement. At the rear end of the clamping arrangement the axle seating portions are tightened towards each other by a bolt 8 and nut 9. The bolt 8 extends through bores in the respective rear ends of the axle seating portions 32 and 42. In an alternative embodiment the rear end of the axle seating portions may also be clamped together by multiple bolts, or by a U-bolt.

An interlocking recess 11 is formed in the clamping region of the axle body 2. The interlocking recess 11 cooperates with an interlocking protrusion 47 which in the specific embodiment of Figs. 1 and 2 is integrally formed on the axle seating portion 42 of the rear arm 4 and in particular extending from the concave engagement surface 45 thereof. The axle seating portions 32 and 42 are rigidly clamped on the clamping region of the axle body 2. However, only a clamping force is in practise not enough to prevent relative movements in the rotational direction (tangential direction) between the round axle body and the clamping parts 32, 42. Therefore, the interlocking between the interlocking recess 11 and the interlocking protrusion 47 is provided. Thus torsional loads on the clamping arrangement, inter alia due to roll movements of the vehicle, will not lead to relative movement between the axle body 2 and the clamping parts 32, 42 and eventual possible loosening of the clamping arrangement which would lead to failure of the suspension 1.

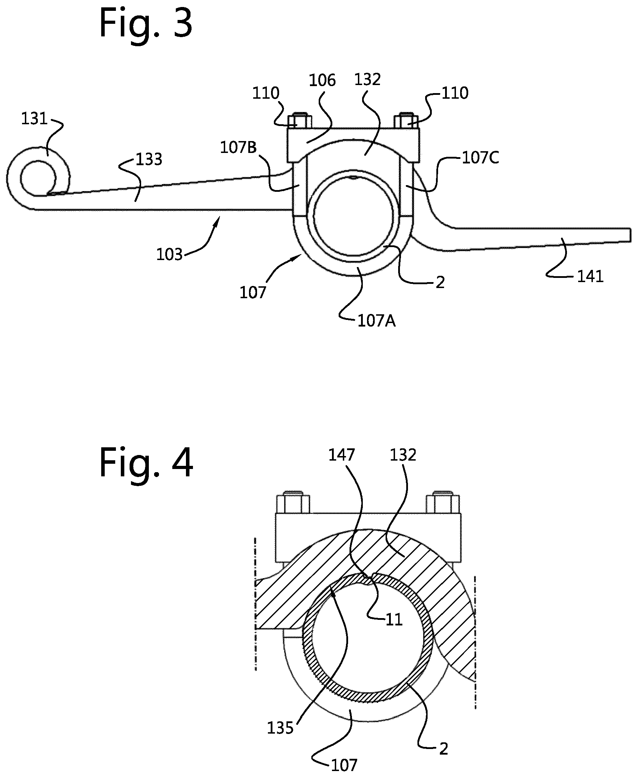

In the Figs 3 and 4 is illustrated a wheel axle suspension wherein the trailing arm is a one piece, monolithically formed trailing arm 103. The trailing arm 103 is made of spring steel. The trailing arm 103 has an eyelet 131, an axle seating portion 132 and a spring portion 133 therebetween. The trailing arm 103 has an integral support arm 141 for the air spring which is integrally formed on the rear end of the axle seating portion. The axle body is clamped in the axle seating portion 132 against a concavely formed axle engagement surface 135 by means of U-bolts 107 which extend around the axle body with their bend portion 107A, wherein one of the legs 107B extends at a front side of the axle body upwards and along the lateral side of the trailing arm and the other one of the legs 107C extends at a rear side of the axle body upwards and along the lateral side of the trailing arm 103. A strap plate 106 engages the upper side of the trailing arm 103 and contains bores through which the legs 107B and 107C of the U-bolts 107 pass. The U-bolts 107 are tightened by nuts 110 with respect to the strap plate 106.

The axle body 2 includes an interlocking recess 11. An interlocking protrusion 147 is integrally formed on the axle seating portion 132 of the trailing arm 103 and protrudes from the concave surface 135. The function is the same as is described in the above with reference to Figs. 1 and 2.

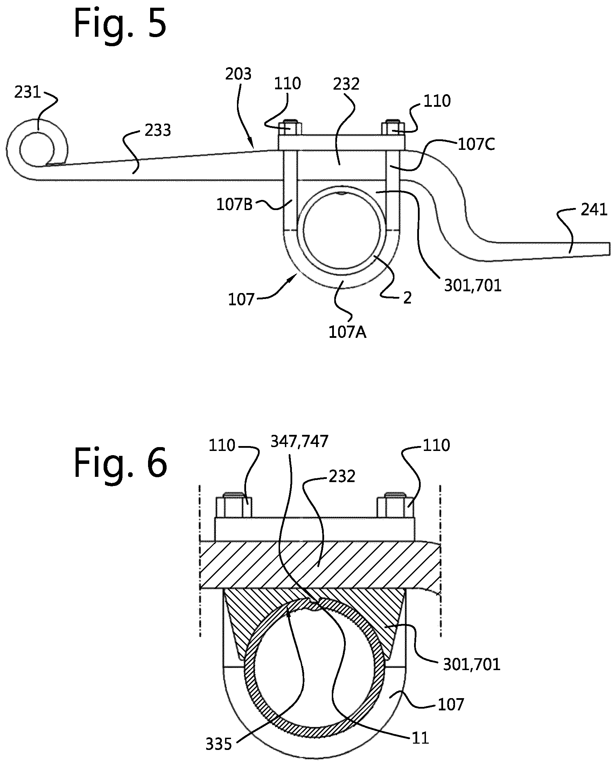

Another embodiment of a wheel axle suspension is illustrated in Figs. 5 and 6. Unlike the embodiments of the previous figures the axle body 2 in this embodiment is not seated directly against the trailing arm, but an intermediate part, a so called axle pad is arranged against the trailing arm, which axle pad forms the axle seating part.

The trailing arm is a one piece, monolithically formed trailing arm 203. The trailing arm 203 is made of spring steel. The trailing arm 103 has an eyelet 131 and a spring portion 133 extending from the eyelet towards the rear. The trailing arm 203 has an integral support arm 241 for the air spring which is integrally formed on the rear. Between the spring arm and the support arm 241 an intermediate portion 232 is present, where the axle body 2 is attached to the trailing arm 203. On an underside of the intermediate portion 232 an axle pad 301, 701 is positioned. The axle body 2 is clamped against a concavely formed axle engagement surface 335 of the axle pad 301, 701 by means of U-bolts 107 which extend around the axle body 2 with their bend portion 107A, wherein one of the legs 107B extends at a front side of the axle body 2 upwards and along the lateral side of the trailing arm 203 and the other one of the legs 107C extends at a rear side of the axle body 2 upwards and along the lateral side of the trailing arm 103. A strap plate 106 engages the upper side of the trailing arm 103 and contains bores through which the legs 107B and 107C of the U-bolts 107 pass. The U-bolts 107 are tightened by nuts 110 with respect to the strap plate 106. Thereby the axle pad 301, 701 is clamped between the axle body 2 and the trailing arm 203.

The axle body 2 includes an interlocking recess 11. An interlocking protrusion 347, 747 is integrally formed on the axle seating portion of the axle pad 301, 701 and protrudes from the concave engagement surface 335. The function is the same as is described in the above with reference to Figs. 1 and 2.

The above described embodiments of wheel axle suspensions are to be considered merely as non-limiting examples. Many variations are thinkable.

According to the invention the interlocking recess 11 in the axle body 2 is formed by a forming process wherein a stamp member is pressed into the outer surface of the tubular wall so as to form an indent. The inner side of the tubular wall does not have to be supported while forming the indent in order to prevent too much deformation of the axle body around the indent.

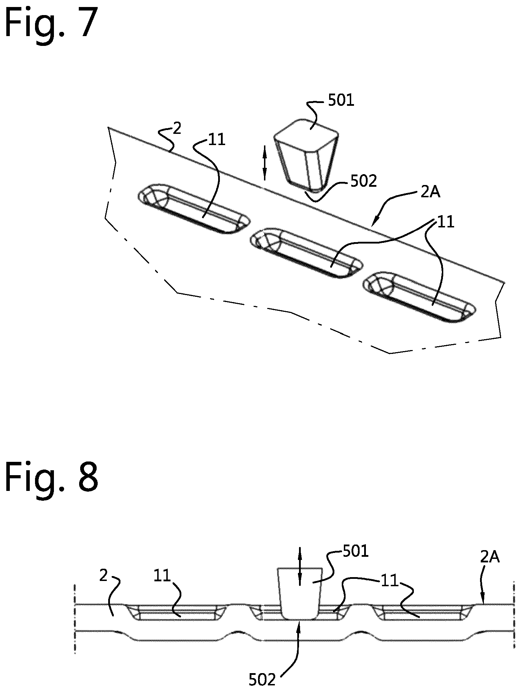

In Figs. 7 and 8 an axle body 2 is shown wherein three interlocking recesses 11 are made in line with each other in the longitudinal direction of the axle body 2. The stamp member 501 is pressed in the outer surface 2A of the axle body and creates an indent. The stamp member 501 has a tip portion 502 adapted to engage the surface in which the indent has to be made. The dimension of the stamp 502 and in particular of the tip portion 502 is small enough that the surface pressure on the stamped surface portion of the tubular wall locally exceeds the yield point to form the indent. The pressing force which is required to make the indent with the relatively small stamp 502 is so low that the tubular wall portion adjacent the interlocking recess 11 is not deforming plastically in the radial inward direction, sometimes referred to as "sagging", or at most to a distance which is at most corresponding to the thickness t of the tubular wall. In practise the sagging remains preferably within a range of 0 to 0,5 times the thickness t of the tubular wall.

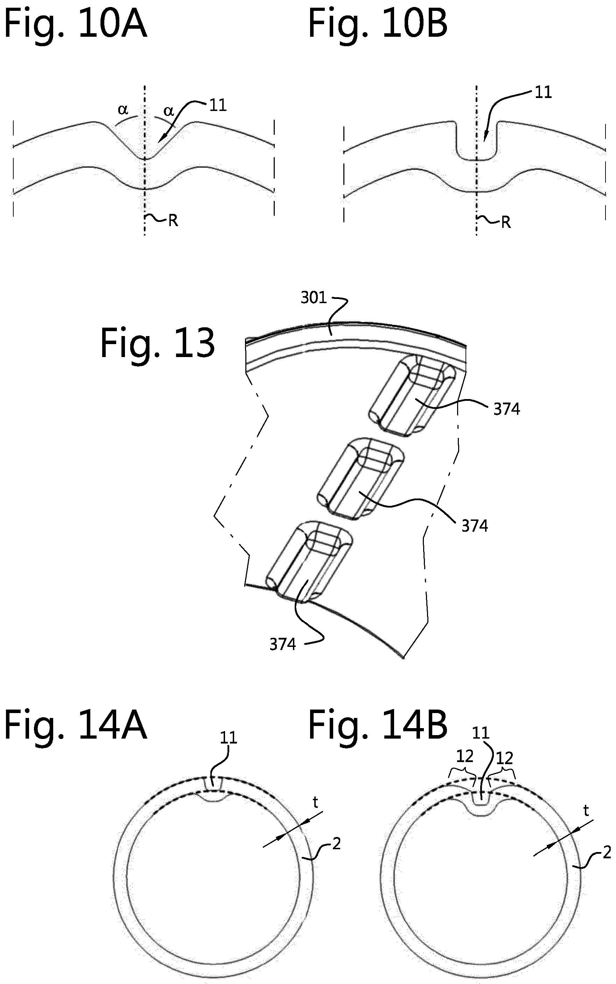

In Fig. 14A is shown a situation where the wall portion surrounding the recess 11 is not deformed, whereby a sharp and well defined edge of the recess 11 is obtained. The advantage of no or only a small inward deformation of the surrounding area 12 of the interlocking recess 11 is that the interlocking protrusion 47, 147, 347 does not easily escape, or "roll out" of the interlocking recess 11. The smaller the deformation in the areas 12, the more secure the protrusion can be retained in the recess 11. In Fig. 14B is shown a situation wherein the surrounding areas, especially the areas 12 along the longitudinal edges of the interlocking recess 11 are deformed inwardly, and thus deviates from the original circle shape. In the state shown in Fig. 14B the adjacent wall portion at the edge of the recess 11 is moved inwardly over a distance which corresponds to the thickness t of the tubular wall of the axle body. In practise the thickness t may be about 10mm and the inward deformation will be within the range of 0 to 0,5 times the thickness t.

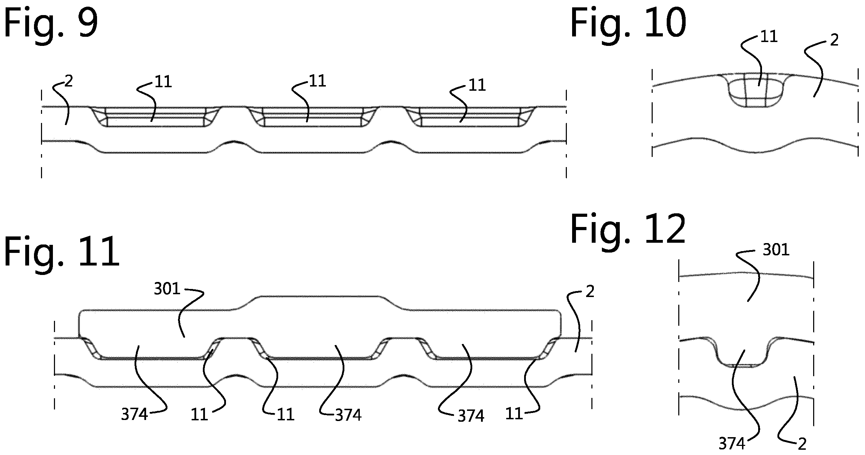

In a practical embodiment the recesses 11 shown in Figs. 7 and 8 may have a longitudinal length of about 30mm a width of 10mm and a depth of 6mm. The longitudinal length of the tip portion 502 of the stamp 501 may be considerably smaller, e.g. 10-15mm, and the recess 11 is made by pressing an indent, then retract and translate the stamp several times and press overlapping indents to form the entire recess 11. One or more recesses can be formed like this in the outer surface 2A of the axle body 2. For example three recesses 11 in line in the longitudinal direction of the axle body 2, as shown in Figs. 7 - 9. In Fig. 11 - 12 is visible that an axle pad 301 having three protrusions 374 (cf. Fig. 13) are received in the three recesses 11. In this way interlocking interfaces between the protrusions 374 and the recesses 11 is provided having a sufficient surface to prevent deformation due to the torsional loads on the clamping arrangement of the axle body.

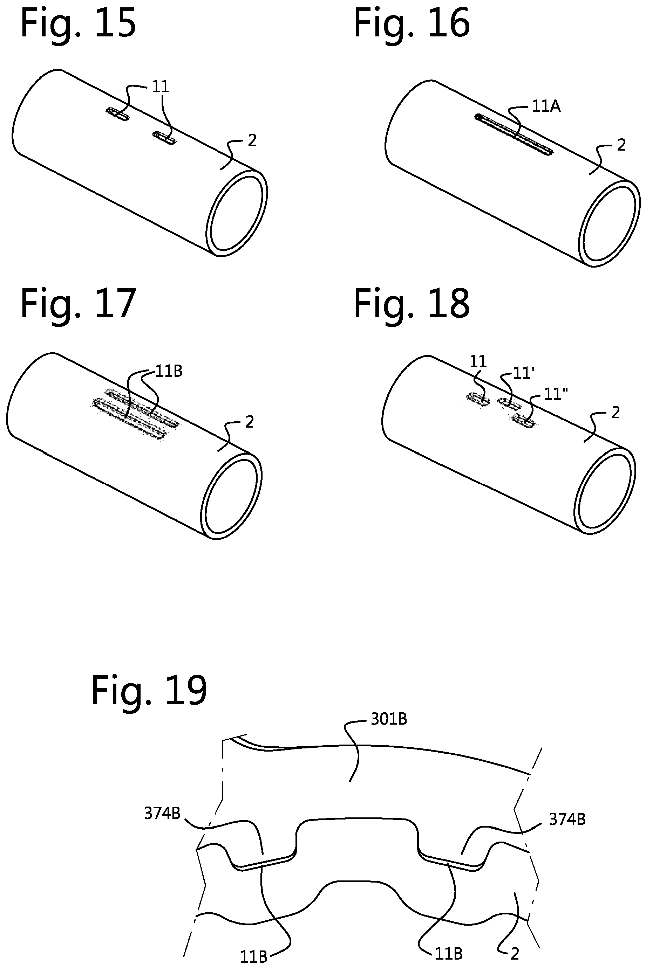

With the method of the invention different recess patterns can be made. Thereby the surface area of the interlocking interfaces between the recesses and the protrusions can be varied and the surface pressure can be varied and kept between a safe limit. Non-limiting examples of recess patterns are illustrated in Figs. 15 - 18.

In Fig. 15 a clamping region of an axle body 2 having two interlocking recesses 11 in line with a considerable distance between them is possible.

In Fig. 16 a clamping region of an axle body 2 having one long recess 11A is illustrated.

In Fig. 17 a clamping region of an axle body 2 having two parallel long recess 11B is illustrated. In Fig. 19 is shown a cross section of an axle body 2 as shown in Fig. 17 wherein an axle pad 301B having two parallel protrusions 374B are received in the parallel recesses 11B formed in the axle body 2.

In Fig . 18 a clamping region of an axle body 2 having three recesses 11, 11', 11" is illustrated, wherein the middle recess 11' is offset from the other two recesses 11, 11", which are aligned.

The recess 11 can have in cross section different shapes. It may be a V-groove, as is illustrated in Fig. 10A, wherein the sidewalls extend under an angle α (e.g. 45°) with respect to the radius R at the centre of the recess 11. It may also be a recess 11 having perpendicular sidewalls illustrated in Fig. 10B, which are parallel to the radius R at the recess. Many cross sectional recess shapes are possible within the range between the shape of Fig. 10A and of Fig. 10B. In Fig. 10 a practical embodiment is illustrated wherein the sidewalls extend under an angle of approximately 10° with regard to radius R at the recess 11. The sidewalls bear against the sidewalls of the protrusion that is in use received in the recess.

In the above described method one or more interlocking recesses are made in the axle body by cold forming and does not require support of the axle body from the interior side of the axle body.

## Claims

1. Method for manufacturing a wheel axle of a utility vehicle such as a trailer, semi-trailer or a truck, the wheel axle comprising a hollow axle body (2) comprising a steel tubular wall having a thickness t and having a clamping region adapted to be clamped in use between clamping parts (32, 42, 107A, 132, 301, 701) of the vehicle suspension (1) by means of tensioning means (7, 8, 9, 107, 110), wherein an interlocking recess (11, 11', 11", 11A, 11B) is formed in the clamping region, **characterized in that** the interlocking recess (11, 11', 11", 11A, 11B) is formed by a cold forming process wherein a stamp member (501) is pressed into the outer surface 2A of the tubular wall so as to form an indent, wherein the dimension of the stamp (501) and the pressing force are such that the surface pressure on the stamped surface portion of the tubular wall locally exceeds the yield point to form the indent and the pressing force is such that the tubular wall portion (12) adjacent the interlocking recess (11, 11', 11", 11A, 11B) is plastically sagging over a distance inwards which is at most corresponding to the thickness t of the tubular wall, preferably is within a range of 0 to 0,5 times the thickness t of the tubular wall.

2. Method according to claim 1, wherein the wheel axle includes axle stubs which are attached to each one of the ends of the tubular axle body before the interlocking recess (11, 11', 11", 11A, 11B) is formed in the axle body (2).

3. Method according to any of the preceding claims, wherein the axle body (2) is provided with an external surface coating, before the interlocking recess (11, 11', 11", 11A, 11B) is formed in the axle body (2).

4. Method according to any of the preceding claims, wherein the axle body (2), at least at the clamping region, is formed having a substantially circular cross section.

5. Method according to any of the preceding claims, wherein the stamp (501) is displaced back and forth in the longitudinal direction each time between two press movements, such that at each press movement an indent is formed, wherein the indents adjoin each other and together form one interlocking recess (11, 11', 11", 11A, 11B).

6. Method according to any of the preceding claims wherein the interlocking recess (11, 11', 11", 11A, 11B) is formed having an elongate shape having a longitudinal axis extending in the axial direction of the axle body (2).

7. Method according to any of the preceding claims, wherein a plurality of interlocking recesses (11, 11', 11", 11B) is formed in the clamping region of the axle body.

8. Method according to claim 7, wherein the interlocking recesses (11, 11', 11") are formed in a staggered pattern.

9. Method according to claim 7, wherein the recesses (11) are formed in line.

10. Method according to claim 9, wherein the recesses (11) are formed with an intermediate bridge between longitudinal ends of consecutive ones of the recesses (11).

11. Method according to any of the preceding claims, wherein the recess (11) is formed with tapering sidewalls, wherein the tapering sidewalls have a depth which is smaller than the wall thickness of the tubular wall.

12. Method according to any of the preceding claims, wherein the recess (11) is formed with tapering sidewalls having an inclination with respect to a radius through a centre of the recess, wherein the angle (α) of inclination of the tapering sidewalls is within the range 0° - 45°, preferably in the range 5° - 20°.

13. Method for forming an interlocking recess (11, 11', 11", 11A, 11B) in a steel tubular axle body (2) for a wheel axle of a utility vehicle such as a trailer, semi-trailer or a truck, **characterized in that** the interlocking recess (11, 11', 11", 11A, 11B) is formed by a cold forming process, wherein a stamp member (501) is pressed into the outer surface (2A) of the tubular wall so as to form an indent, wherein the dimension of the stamp member (501) and the pressing force are such that the surface pressure on the stamped surface portion of the tubular wall locally exceeds the yield point to form the indent and the pressing force is such that the tubular wall portion (12) adjacent the interlocking recess (11, 11', 11", 11A, 11B) is plastically sagging to a distance which is at most corresponding to the thickness t of the tubular wall, preferably is within a range of 0 to 0,5 times the thickness t of the tubular wall.

14. Wheel axle of a utility vehicle such as a trailer, semi-trailer or a truck, made by a method according to claim 3 or according to any of the claims 4 -12 as far as being dependent on claim 3.

15. Air sprung vehicle suspension comprising a wheel axle according to claim 14 and further comprising a pair of trailing arms (3, 103, 203) pivotally attached to a vehicle chassis and clamped against the clamping region of the axle body (2) , and an air spring (5) operational between the wheel axle and the vehicle chassis.

## Patentansprüche

1. Verfahren zum Herstellen einer Radachse eines Nutzfahrzeugs, wie etwa eines Anhängers, Sattelanhängers oder eines Lastkraftwagens, wobei die Radachse einen hohlen Achskörper (2) umfasst, der eine Stahlrohrwand mit einer Dicke t umfasst und einen Klemmbereich aufweist, der dazu ausgelegt ist, im Gebrauch mittels Spannmitteln (7, 8, 9, 107, 110) zwischen Klemmteilen (32, 42, 107A, 132, 301, 701) der Fahrzeugaufhängung (1) eingeklemmt zu sein, wobei eine Verriegelungsausnehmung (11, 11', 11", 11A, 11B) in dem Klemmbereich gebildet ist, **dadurch gekennzeichnet, dass** die Verriegelungsausnehmung (11, 11', 11", 11A, 11B) durch einen Kaltformgebungsprozess gebildet wird, wobei ein Stanzelement (501) in die Außenfläche 2A der Rohrwand gepresst wird, um eine Vertiefung zu bilden, wobei die Abmessung der Stanze (501) und die Presskraft derart sind, dass der Oberflächendruck auf den gestanzten Oberflächenabschnitt der Rohrwand lokal die Streckgrenze überschreitet, um die Vertiefung zu bilden, und die Presskraft derart ist, dass der Rohrwandabschnitt (12) angrenzend an die Verriegelungsausnehmung (11, 11', 11", 11A, 11B) plastisch über eine Distanz nach innen durchhängt, die höchstens der Dicke t der Rohrwand entspricht, wobei sie vorzugsweise im Bereich des 0- bis 0,5-Fachen der Dicke t der Rohrwand liegt.

2. Verfahren nach Anspruch 1, wobei die Radachse Achsstummel umfasst, die an jedem der Enden des Rohrachskörpers befestigt werden, bevor die Verriegelungsausnehmung (11, 11', 11", 11A, 11B) in dem Achskörper (2) gebildet wird.

3. Verfahren nach einem der vorhergehenden Ansprüche, wobei der Achskörper (2) mit einer Außenflächenbeschichtung versehen wird, bevor die Verriegelungsausnehmung (11, 11', 11", 11A, 11B) in dem Achskörper (2) gebildet wird.

4. Verfahren nach einem der vorhergehenden Ansprüche, wobei der Achskörper (2) zumindest am Klemmbereich mit einem im Wesentlichen kreisförmigen Querschnitt gebildet wird.

5. Verfahren nach einem der vorhergehenden Ansprüche, wobei die Stanze (501) jedes Mal zwischen zwei Pressbewegungen in der Längsrichtung vor und zurück verschoben wird, so dass bei jeder Pressbewegung eine Vertiefung gebildet wird, wobei die Vertiefungen aneinander grenzen und zusammen eine Verriegelungsausnehmung (11, 11', 11", 11A, 11B) bilden.

6. Verfahren nach einem der vorhergehenden Ansprüche, wobei die Verriegelungsausnehmung (11, 11', 11", 11A, 11B) mit einer länglichen Form mit einer Längsachse gebildet wird, die sich in der axialen Richtung des Achskörpers (2) erstreckt.

7. Verfahren nach einem der vorhergehenden Ansprüche, wobei mehrere Verriegelungsausnehmungen (11, 11', 11", 11B) in dem Klemmbereich des Achskörpers gebildet werden.

8. Verfahren nach Anspruch 7, wobei die Verriegelungsausnehmungen (11, 11', 11") in einem versetzten Muster gebildet werden.

9. Verfahren nach Anspruch 7, wobei die Ausnehmungen (11) in einer Linie gebildet werden.

10. Verfahren nach Anspruch 9, wobei die Ausnehmungen (11) mit einer Zwischenbrücke zwischen Längsenden von aufeinanderfolgenden der Ausnehmungen (11) gebildet werden.

11. Verfahren nach einem der vorhergehenden Ansprüche, wobei die Ausnehmung (11) mit sich verjüngenden Seitenwänden gebildet wird, wobei die sich verjüngenden Seitenwände eine Tiefe aufweisen, die kleiner als die Wanddicke der Rohrwand ist.

12. Verfahren nach einem der vorhergehenden Ansprüche, wobei die Ausnehmung (11) mit sich verjüngenden Seitenwänden gebildet wird, die eine Neigung in Bezug auf einen Radius durch eine Mitte der Ausnehmung aufweisen, wobei der Neigungswinkel (α) der sich verjüngenden Seitenwände im Bereich 0° - 45°, vorzugsweise im Bereich 5° - 20°, liegt.

13. Verfahren zum Bilden einer Verriegelungsausnehmung (11, 11', 11", 11A, 11B) in einem Stahlrohrachskörper (2) für eine Radachse eines Nutzfahrzeugs, wie etwa eines Anhängers, Sattelanhängers oder eines Lastkraftwagens, **dadurch gekennzeichnet, dass** die Verriegelungsausnehmung (11, 11', 11", 11A, 11B) durch einen Kaltformgebungsprozess gebildet wird, wobei ein Stanzelement (501) in die Außenfläche (2A) der Rohrwand gepresst wird, um eine Vertiefung zu bilden, wobei die Abmessung des Stanzelements (501) und die Presskraft derart sind, dass der Oberflächendruck auf den gestanzten Oberflächenabschnitt der Rohrwand lokal die Streckgrenze überschreitet, um die Vertiefung zu bilden, und die Presskraft derart ist, dass der Rohrwandabschnitt (12) angrenzend an die Verriegelungsausnehmung (11, 11', 11", 11A, 11B) plastisch auf einer Distanz nach innen durchhängt, die höchstens der Dicke t der Rohrwand entspricht, wobei sie vorzugsweise im Bereich des 0- bis 0,5-Fachen der Dicke t der Rohrwand liegt.

14. Radachse eines Nutzfahrzeugs, wie etwa eines Anhängers, Sattelanhängers oder eines Lastkraftwagens, die durch ein Verfahren nach Anspruch 3 oder nach einem der Ansprüche 4-12, soweit abhängig von Anspruch 3, hergestellt ist.

15. Luftgefederte Fahrzeugaufhängung, umfassend eine Radachse nach Anspruch 14 und ferner umfassend ein Paar von Längslenkern (3, 103, 203), die schwenkbar an einem Fahrzeugchassis angebracht und gegen den Klemmbereich des Achskörpers (2) geklemmt sind, und eine zwischen der Radachse und dem Fahrzeugchassis wirkende Luftfeder (5).

## Revendications

1. Procédé de fabrication d'un essieu de roue d'un véhicule utilitaire tel qu'une remorque, une semi-remorque ou un camion, l'essieu de roue comprenant un corps d'essieu creux (2) comprenant une paroi tubulaire en acier ayant une épaisseur t et ayant une zone de serrage conçue pour être serrée lors de l'utilisation entre des pièces de serrage (32, 42, 107A, 132, 301, 701) de la suspension de véhicule (1) à l'aide de moyens de tension (7, 8, 9, 107, 110), un évidement de verrouillage (11, 11', 11", 11A, 11B) étant formé dans la zone de serrage, **caractérisé en ce que** l'évidement de verrouillage (11, 11', 11", 11A, 11B) est formé par un procédé de formage à froid dans lequel un élément poinçon (501) est pressé dans la surface externe 2A de la paroi tubulaire de sorte à former une indentation, la dimension du poinçon (501) et la force de pression étant telles que la pression superficielle sur la partie de surface estampée de la paroi tubulaire dépasse localement le seuil d'élasticité pour former l'indentation et la force de pression étant telle que la partie de paroi tubulaire (12) adjacente à l'évidement de verrouillage (11, 11', 11", 11A, 11B) s'affaisse plastiquement sur une distance vers l'intérieur qui correspond au plus à l'épaisseur t de la paroi tubulaire, de préférence qui est dans une plage comprise entre 0 et 0,5 fois l'épaisseur t de la paroi tubulaire.

2. Procédé selon la revendication 1, l'essieu de roue comprenant des fusées d'essieu qui sont fixées à chacune des extrémités du corps d'essieu tubulaire avant que l'évidement de verrouillage (11, 11', 11", 11A, 11B) ne soit formé dans le corps d'essieu (2).

3. Procédé selon l'une quelconque des revendications précédentes, le corps d'essieu (2) étant pourvu d'un revêtement de surface externe, avant que l'évidement de verrouillage (11, 11', 11", 11A, 11B) ne soit formé dans le corps d'essieu (2).

4. Procédé selon l'une quelconque des revendications précédentes, le corps d'essieu (2) étant formé, au moins au niveau de la zone de serrage, avec une section transversale sensiblement circulaire.

5. Procédé selon l'une quelconque des revendications précédentes, le poinçon (501) étant déplacé en avant et en arrière dans la direction longitudinale à chaque fois entre deux mouvements de pression, de sorte qu'à chaque mouvement de pression, une indentation soit formée, les indentations se rejoignant et formant ensemble un évidement de verrouillage (11, 11', 11", 11A, 11B).

6. Procédé selon l'une quelconque des revendications précédentes, l'évidement de verrouillage (11, 11', 11", 11A, 11B) étant formé avec une forme allongée ayant un axe longitudinal s'étendant dans la direction axiale du corps d'essieu (2).

7. Procédé selon l'une quelconque des revendications précédentes, une pluralité d'évidements de verrouillage (11, 11', 11", 11B) étant formée dans la zone de serrage du corps d'essieu.

8. Procédé selon la revendication 7, les évidements de verrouillage (11, 11', 11") étant formés en quinconce.

9. Procédé selon la revendication 7, les évidements (11) étant formés en ligne.

10. Procédé selon la revendication 9, les évidements (11) étant pourvus d'un pont intermédiaire entre des extrémités longitudinales d'évidements (11) consécutifs.

11. Procédé selon l'une quelconque des revendications précédentes, l'évidement (11) étant formé avec des parois latérales effilées, les parois latérales effilées ayant une profondeur qui est inférieure à l'épaisseur de paroi de la paroi tubulaire.

12. Procédé selon l'une quelconque des revendications précédentes, l'évidement (11) étant formé avec des parois latérales effilées ayant une inclinaison par rapport à un rayon passant par un centre de l'évidement, l'angle (α) d'inclinaison des parois latérales effilées étant dans la plage comprise entre 0° et 45°, de préférence dans la plage comprise entre 5° et 20°.

13. Procédé de formation d'un évidement de verrouillage (11, 11', 11", 11A, 11B) dans un corps d'essieu tubulaire en acier (2) pour un essieu de roue d'un véhicule utilitaire tel qu'une remorque, une semi-remorque ou un camion, **caractérisé en ce que** l'évidement de verrouillage (11, 11', 11", 11A, 11B) est formé par un procédé de formage à froid, un élément poinçon (501) étant pressé dans la surface externe (2A) de la paroi tubulaire de sorte à former une indentation, la dimension de l'élément poinçon (501) et la force de pression étant telles que la pression superficielle sur la partie de surface estampée de la paroi tubulaire dépasse localement le point d'élasticité pour former l'indentation et la force de pression étant telle que la partie de paroi tubulaire (12) adjacente à l'évidement de verrouillage (11, 11', 11", 11A, 11B) s'affaisse plastiquement à une distance qui correspond au plus à l'épaisseur t de la paroi tubulaire, de préférence qui est dans une plage comprise entre 0 et 0,5 fois l'épaisseur t de la paroi tubulaire.

14. Essieu de roue d'un véhicule utilitaire tel qu'une remorque, une semi-remorque ou un camion, fabriqué par un procédé selon la revendication 3 ou selon l'une quelconque des revendications 4 à 12, dans la mesure où elle dépend de la revendication 3.

15. Suspension pneumatique de véhicule comprenant un essieu de roue selon la revendication 14 et comprenant en outre une paire de bras longitudinaux (3, 103, 203) fixés de manière pivotante à un châssis de véhicule et serrés contre la région de serrage du corps d'essieu (2), et un ressort pneumatique (5) fonctionnant entre l'essieu de roue et le châssis de véhicule.
